(19)

Europäisches
Patentamt
European
Patent Office
Office européen
des brevets

(11) **EP 3 972 050 B1**

(12) **EUROPEAN PATENT SPECIFICATION**

(45) Date of publication and mention
of the grant of the patent:
**29.10.2025 Bulletin 2025/44**

(21) Application number: **20834706.2**

(22) Date of filing: **24.06.2020**

(51) International Patent Classification (IPC):
*H01Q 1/24* (2006.01)        *H04M 1/02* (2006.01)
*H01Q 1/42* (2006.01)        *H01Q 15/04* (2006.01)
*H01Q 15/08* (2006.01)       *H01Q 19/06* (2006.01)
*H01Q 21/06* (2006.01)

(52) Cooperative Patent Classification (CPC):
**H04M 1/026; H01Q 1/243; H01Q 1/42; H01Q 15/04;
H01Q 15/08; H01Q 19/062; H01Q 21/06**

(86) International application number:
**PCT/CN2020/098115**

(87) International publication number:
**WO 2021/000780 (07.01.2021 Gazette 2021/01)**

(54) **ANTENNA ASSEMBLY AND ELECTRONIC DEVICE**

ANTENNENANORDNUNG UND ELEKTRONISCHE VORRICHTUNG

ENSEMBLE ANTENNE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2019 CN 201910588862**

(43) Date of publication of application:
**23.03.2022 Bulletin 2022/12**

(73) Proprietor: **GUANGDONG OPPO MOBILE
TELECOMMUNICATIONS
CORP., LTD.
Dongguan, Guangdong 523860 (CN)**

(72) Inventor: **JIA, Yuhu
Dongguan, Guangdong 523860 (CN)**

(74) Representative: **Taor, Simon Edward William et al
Venner Shipley LLP
200 Aldersgate
London EC1A 4HD (GB)**

(56) References cited:
EP-A1- 3 979 422          EP-A2- 0 884 799
WO-A1-2018/095535         CN-A- 102 916 258
CN-A- 103 094 712         CN-A- 108 110 419
CN-A- 109 841 964         CN-U- 204 927 532
US-A1- 2017 201 014       US-A1- 2018 316 090

**Description**

TECHNICAL FIELD

This disclosure relates to the technical field of electronic technology, and in particular, to an antenna assembly and an electronic device.

BACKGROUND

With development of mobile communication technology, people have higher and higher requirements for data transmission rate and antenna signal bandwidth, and how to improve a signal transmission quality and a data transmission rate of an antenna of an electronic device becomes a problem to be solved.

WO2018/095535A1 discloses a vertical antenna patch in a cavity region. A multi-layer circuit structure (110) has multiple layers stacked along a vertical direction. Further, at least one cavity region (120) is formed at an edge of the multi-layer circuit structure (110). The at least one cavity region (120) is formed of multiple non-conductive vias from which a dielectric substrate material of the multi-layer circuit structure (120) is removed. Further, the device comprises at least one vertical antenna patch (130) arranged in the at least one cavity region (120).

US2017/201014A1 discloses an electronic device may include: an array antenna including a plurality of first radiating conductors that transmit or receive a wireless signal in a first frequency band and are arranged on a circuit board; and a lens unit including at least one lens disposed on a housing of the electronic device to correspond to the first radiating conductors. The lens unit may refract or reflect a wireless signal transmitted/received through each of the first radiating conductors. The electronic device as described above may be variously implemented according to embodiments. For example, a portion of the lens unit may transmit/receive a wireless signal in a frequency band that is different from the frequency band of the wireless signal transmitted/received by the first radiating conductors.

EP0884799A2 discloses a semiconductor module having antenna element therein. The semiconductor module has a compact antenna element (25) capable of providing desired directivity. When an electromagnetic-wave radiation window has the capability of a lens, directivity can be set arbitrarily. For improving directivity, a convergent lens for converging millimeter waves or quasi millimeter waves is employed. For impairing directivity, a divergent lens is employed. In the case of the convergent lens, a direction in which radio waves are radiated or received by the antenna element can be set by deviating the center axis of the lens from the center of the antenna element.

SUMMARY

An antenna assembly and an electronic device are provided in implementations of the disclosure, which can improve antenna signal transmission quality and data transmission rate.

According to one aspect, an antenna assembly is provided as out it claim 1. Additional features are set out in claims 2 to 9. According to another aspect, an electronic device is provided as out it claim 11. Additional features are set out in claim 12.

Different regions of the dielectric structure can bring different phase variations to the RF signal, such that a phase of the RF signal passing through the dielectric structure is regulated, so as to make the phase of the RF signal emitted out of the dielectric structure has the same phase, the dielectric structure can act as a "lens", which can converge the RF signal emitted by the antenna module to concentrate energy of the RF signal, thereby increasing a gain of the RF signal emitted by the antenna module.

BRIEF DESCRIPTION OF THE DRAWINGS

In order to describe technical solutions of implementations in the present disclosure more clearly, the following will give a brief introduction to the accompanying drawings used for describing implementations. Apparently, the accompanying drawings hereinafter described are merely some implementations of the disclosure. Based on these drawings, those of ordinary skill in the art can also obtain other drawings without creative effort.

FIG. 1 is a schematic structural view illustrating an electronic device provided in implementations of the present disclosure.
FIG. 2 is a schematic structural view illustrating an antenna assembly provided in implementations of the present disclosure.
FIG. 3 is a top view of a side where a battery cover of a first electronic device is provided in implementations of the present disclosure.
FIG. 4 is a schematic structural view illustrating an antenna assembly provided in other implementations of the present disclosure.

FIG. 5 is a first schematic cross-sectional view of an electronic device illustrated in FIG. 3 along line A-A.

FIG. 6 is a second schematic cross-sectional view of an electronic device illustrated in FIG. 3 along line A-A.

FIG. 7 is a third schematic cross-sectional view of an electronic device illustrated in FIG. 3 along line A-A.

FIG. 8 is a fourth schematic cross-sectional view of an electronic device illustrated in FIG. 3 along line A-A.

FIG. 9 is a fifth schematic cross-sectional view of an electronic device illustrated in FIG. 3 along line A-A.

FIG. 10 illustrates beam patterns of an antenna module provided in implementations of the disclosure, when disposed in free space and under a dielectric structure and at 28 gigahertz (GHz) and 28.5 GHz respectively.

FIG. 11 is a top view of a side where a battery cover of a second electronic device is provided in other implementations of the present disclosure.

FIG. 12 is a schematic cross-sectional view of an electronic device illustrated in FIG. 11 along line B-B.

FIG. 13 is a top view of a side where a battery cover of a third electronic device is provided in other implementations of the present disclosure.

FIG. 14 is a schematic cross-sectional view of an electronic device illustrated in FIG. 13 along line C-C.

FIG. 15 is a top view of a side where a battery cover of a fourth electronic device is provided in other implementations of the present disclosure.

FIG. 16 is a schematic cross-sectional view of an electronic device illustrated in FIG. 15 along line D-D.

FIG. 17 is a top view of an electronic device provided in other implementations of the present disclosure.

FIG. 18 is a side view of an electronic device provide in other implementations of the present disclosure.

DETAILED DESCRIPTION

The following will give a clear and complete description to technical solutions of the disclosure with combination of accompanying drawings in the implementations.

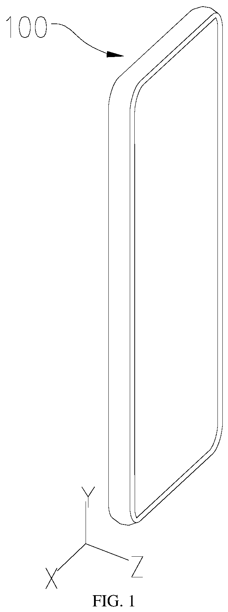

FIG. 1 is a schematic view illustrating an electronic device from a first view. The electronic device 100 may be any products with antenna, such as a tablet computer, a mobile phone, a notebook computer, an in-vehicle equipment, a wearable device, or the like. The present disclosure describes the mobile phone as an example of the electronic device 100. For ease of description, the electronic device 100 is defined with reference to a first viewing angle. Specifically, a width direction of the electronic device 100 is defined as an X-axis direction, a length direction of the electronic device 100 is defined as a Y-axis direction, and a thickness direction of the electronic device 100 is defined as a Z-axis direction.

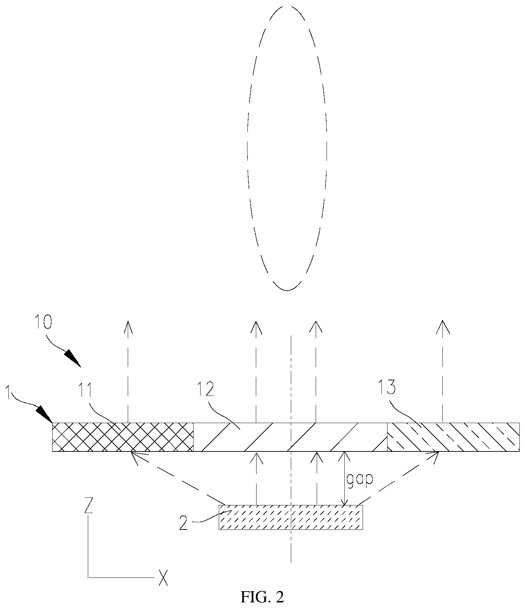

FIG. 2 illustrates an antenna assembly 10 provided in implementations of the present disclosure. As illustrated in FIG. 2, the antenna assembly 10 includes a dielectric structure 1 and an antenna module 2. The dielectric structure 1 has a first region 11, a second region 12, and a third region 13 connected in sequence. The antenna module 2 faces the second region 12, the antenna module 2 is configured to receive and emit an electromagnetic wave signal. For ease of description, the electromagnetic wave signal received or emitted by the antenna module 2 is referred to as a radio frequency (RF) signal. In other words, the antenna module 2 is configured to receive and emit a RF signal. The first region 11 is configured to bring a first phase variation to the RF signal, the second region 12 is configured to bring a second phase variation to the RF signal, the third region 13 is configured to bring a third phase variation to the RF signal, and the second phase variation is different from the first phase variation and the third phase variation.

Different regions of the dielectric structure 1 can bring different phase variations to the RF signal, such that a phase of the RF signal passing through the dielectric structure 1 is regulated, the RF signal emitted out of the dielectric structure 1 has the same or similar phase, the dielectric structure 1 can act as a "lens", which can converge the RF signal emitted by the antenna module 2 to concentrate energy of the RF signal, thereby increasing a gain of the RF signal emitted by the antenna module 2.

Specifically, the RF signal is a modulated electromagnetic wave with a certain radiation frequency. In this implementation, a transmission frequency band of the RF signal may include, but not limited to, millimeter-wave (mm-wave) frequency band, submillimeter frequency band, or terahertz frequency band. In other implementations, the transmission frequency band of the RF signal may include an electromagnetic wave in medium frequency band or low frequency band. Correspondingly, the antenna module 2 can be any antenna capable of receiving and emitting the electromagnetic wave of mm-wave frequency band, submillimeter frequency band, terahertz frequency band, etc. The antenna module 2 includes, but is not limited to, a phased array antenna, etc. In this implementation, the mm-wave signal is taken as an example of the RF signal for illustration.

Specifically, as illustrated in FIG. 2, the dielectric structure 1 as a whole is a substrate capable of making the RF signal pass through, such that the RF signal can be radiated out through the dielectric structure 1. The first phase variation brought by the first region 11 to the RF signal represents a difference value between a phase of the RF signal before reaching the first region 11 and a phase of the RF signal after passing through the first region 11.

In a process that the RF signal passes through the dielectric structure 1, the dielectric structure 1 interacts with the RF signal, such that the RF signal has a varied phase after passing through the dielectric structure 1. The first region 11 and the second region 12 of the dielectric structure 1 have different effects on the RF signal, therefore, the first region 11 and the second region 12 of the dielectric structure 1 bring different phase variations to the RF signal. As such, a RF signal after passing through the first region 11 has a phase the same as or substantially the same as a RF signal after passing through the second region 12, so as to concentrate the energy of the RF signal, and achieve beamforming of the RF signal. In this way, the gain of the RF signal can be increased with aid of the dielectric structure 1.

In terms of the material of the dielectric structure 1, the material of the dielectric structure 1 may be locally uneven, such that the dielectric structure 1 can bring different phase variations to the RF signal. When the dielectric structure 1 is equivalent to a structure in which the first region 11 is made of an even material, the second region 12 is made of an even material, and the third region 13 is made of an even material, the first region 11, the second region 12, and the third region 13 each have a different equivalent dielectric constant. In this way, the RF signal may have different phase variations when interacting with the first region 11, the second region 12, and the third region 13 respectively. Further, it is possible to make the RF signal after passing through the first region 11 have a phase the same as or substantially the same as the RF signal after passing through the second region 12. Thus the energy of the RF signal can be concentrated, and the beamforming of the RF signal can be achieved. In this way, the gain of the RF signal can be improved with aid of the dielectric structure 1.

In terms of the equivalent refractive index of the dielectric structure 1, the dielectric structure 1 can act as a "lens" structure of the RF signal. The first region 11, the second region 12, and the third region 13 of the dielectric structure 1 each have a different equivalent refractive index to the RF signal. In this way, the RF signal may have different phase variations when interacting with the first region 11, the second region 12, and the third region 13 respectively, and it is possible to make the RF signal after passing through the first region 11have a phase the same as or substantially the same as the RF signal after passing through the second region 12. Thus the energy of the RF signal can be concentrated, and the beamforming of the RF signal can be achieved. In this way, the gain of the RF signal can be improved with aid of the dielectric structure 1.

It can be understood that, the first region 11, the second region 12, and the third region 13 of the dielectric structure 1 can bring different phase variations to the RF signal due to reasons including, but not limited to, different characteristics of transmission materials, different secondary radiation waves generated, etc.

In this implementation, the manner that the second phase variation is set to be different from the first phase variation and the third phase variation includes, but is not limited to the following.

In a first possible implementation, as illustrated in FIG. 2, the equivalent dielectric constant of the second region 12 is greater than that of the first region 11 and that of the third region 13, such that the second phase variation is greater than the first phase variation and the third phase variation. In other words, the equivalent refractive index of the second region 12 is less than that of the first region 11 and that of the third region 13, such that the first region 11, the second region 12, and the third region 13 of the dielectric structure 1 is equivalent to a "lens" structure of the RF signal with a large thickness in the middle and a small thickness on both ends.

When the antenna module 2 faces the second region 12, a distance between the antenna module 2 and the second region 12 is less than a distance between the antenna module 2 and the first region 11, and also less than a distance between the antenna module 2 and the third region 13, such that a RF signal reaching a surface of the second region 12 from the antenna module 2 has a phase less than a RF signal reaching a surface of the first region 11 from the antenna module 2, and also less than a RF signal reaching a surface of the third region 13 from the antenna module 2.

When the second phase variation is greater than the first phase variation and the third phase variation, the second region 12 brings a greater phase compensation to the RF signal than the first region 11 and the third region 13, such that the RF signal has the same or substantially the same phases after passing through the first region 11, the second region 12, and the third region 13. In this way, the energy of the RF signal can be concentrated, and the beamforming of the RF signal can be achieved, such that the gain of the RF signal emitted by the antenna module 2 can be increased after the RF signal passes through the dielectric structure 1.

Furthermore, as illustrated in FIG. 2, the equivalent dielectric constant of the first region 11 can be the same as that of the third region 13, such that the first phase variation is the same as the third phase variation. In other words, the equivalent refractive index of the first region 11 can be the same as that of the third region 13, such that the first region 11, the second region 12, and the third region 13 of the dielectric structure 1 is equivalent to a symmetrical "lens" structure which has a large thickness in the middle and a small thickness on both ends.

The first phase variation can be the same as the third phase variation, such that the RF signal after passing through the first region 11 and the RF signal after passing through the third region 13 can be symmetrically concentrated toward the second region 12. Furthermore, a main lobe direction of the RF signal after passing through the first region 11 and the RF signal after passing through the third region 13 can be along or approximately along a normal direction of the second region 12. The main lobe refers to a beam with the greatest radiation intensity in the RF signal.

In other implementations, the equivalent dielectric constant of the first region 11 is different from the third region 13, such that the first phase variation is different from the third phase variation. In this way, the dielectric structure 1 can bring a phase variation to the RF signal more flexibly, and energy concentration as well as the main lobe direction of the RF signal after passing through the first region 11 and the RF signal after passing the third region 13 can be more flexible, so as to adapt to different designs of the antenna assembly 10.

In a second possible implementation, by setting the equivalent dielectric constant of the second region 12 to be less than that of the first region 11 and the third region 13, the second phase variation is less than the first phase variation and the third phase variation. In other words, by adjusting the equivalent refractive index of the second region 12 to be greater than that of the first region 11 and the third region 13, the first region 11, the second region 12, and the third region 13 of the dielectric structure 1 is equivalent to a "lens" structure which has a small thickness in the middle and a large thickness on both ends.

In this implementation, the first phase variation can be the same as or different from the third phase variation, which will not be repeated herein.

The second phase variation can be less than the first phase variation and the third phase variation, such that the second region 12 brings a less phase compensation to the RF signal than the first region 11 and the third region 13. In this way, the RF signal radiated has a wider spatial coverage and a larger spatial coverage angle.

In other implementations, the dielectric structure 1 further includes a fourth region disposed at the first region 11 away from the second region 12 and a fifth region disposed at the third region 13 away from the second region 12. A phase variation brought by each of the fourth region and the fifth region to the RF signal is different from that brought by each of the first region 11 and the second region 12. Furthermore, the phase variation brought by the fourth region to the RF signal is the same as that brought by the fifth region to the RF signal, and the phase variation brought by each of the fourth region and the fifth region to the RF signal is less than that brought by the first region 11 to the RF signal, such that the dielectric structure 1 can bring gradient phase variations to the RF signal in different regions. The dielectric structure 1 provided in this implementation, is equivalent to a "lens" which has a large thickness in the middle and gradually reduced thickness on both ends, such that radiation of the RF signal emitted by the antenna module 2 is closer to the normal direction of the second region 12, which increases the gain of the RF signal emitted by antenna module 2.

As illustrated in FIG. 2, the second region 12 has a transmittance to the RF signal greater than the first region 11 and the third region 13.

Specifically, the second region 12 is provided with a metamaterial structure, the metamaterial structure can be thought of as molecules and atoms of materials, and the metamaterial structure consists of element structures with a size much smaller than a wavelength. According to the equivalent-medium theory, an artificial specific electromagnetic medium with a certain number of element structures which are arranged at regular intervals as a whole can be equivalent to a homogeneous medium with certain equivalent electromagnetic parameters. Suppose that the metamaterial structure is an equivalent homogeneous medium with certain thickness and has reflection and transmission coefficients, by adjusting the metamaterial structure, the reflection coefficient can be minimized and the transmission coefficient can be maximized. For example, by adjusting the metamaterial structure, the transmission coefficient of the metamaterial structure to the RF signal can be adjusted to be the same as or substantially the same as the transmission coefficient of air to the RF signal, such that the metamaterial structure has a relatively high transmittance to RF signal.

The second region 12 is provided with the metamaterial structure, such that the second region 12 has a second transmittance to the RF signal. The first region 11 has a first transmittance to the RF signal and the third region 13 has a third transmittance to the RF signal. Because the second region 12 is provided with the metamaterial structure, the second transmittance is greater than the first transmittance and the second transmittance. When the antenna module 2 faces the second region 12, more RF signals of the antenna module 2 can pass through the second region 12, which is possible to reduce the RF signal loss of the antenna module 2 caused by the dielectric structure 1, and improve radiation efficiency of the antenna module 2. When the antenna module 2 is applied to the electronic device 100 such as a mobile phone and the RF signal is in the mm-wave frequency band, application and radiation effect of the mm-wave frequency band in the electronic devices 100 such as a mobile phone can be improved.

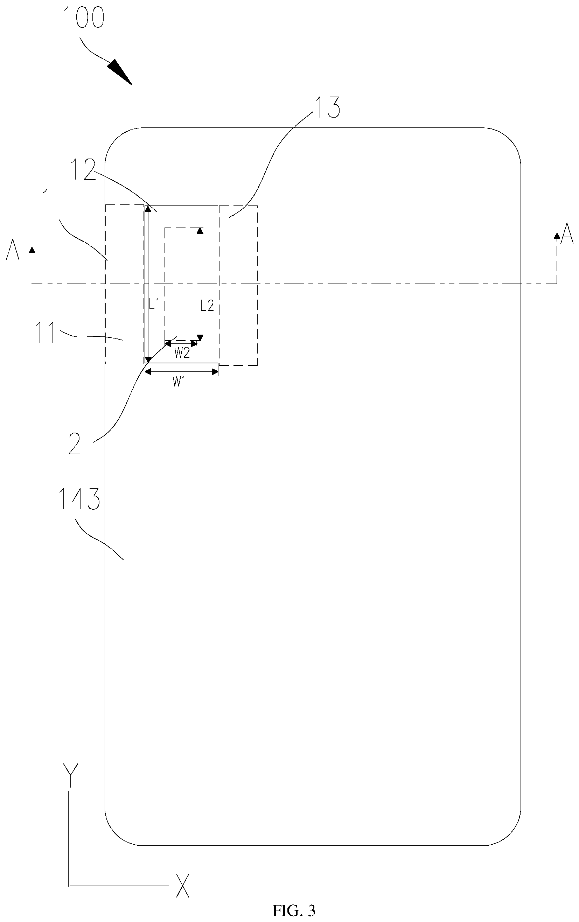

For example, as illustrated in FIG. 3, the electronic device 100 is a mobile phone. The dielectric structure 1 is a battery cover of the electronic device 100. The antenna module 2 is disposed in the electronic device 100. The antenna module 2 receives and emits the RF signal toward the battery cover to realize communication of the electronic device 100. The RF signal can be a mm-wave signal. In this implementation, the battery cover of the electronic device 100 is improved by disposing the metamaterial structure at a partial region of the battery cover. A region of the battery cover where the metamaterial structure is disposed serves as the second region 12, and regions of the battery cover on two opposite ends of the metamaterial serve as the first region 11 and the third region 13. The metamaterial structure includes, but is not limited to, a one-dimensional, two-dimensional or three-dimensional conductive layer structure. On one hand, with aid of the metamaterial structure, the battery cover can exhibit a high radio-wave transmission characteristic to the mm-wave frequency band, and can act as a "mm-wave transparent battery cover" which has a minimum coverage effect (blocking signal radiation) on the mm-wave antenna module 2. On the other hand, the battery cover can act as a local "lens" to achieve the beamforming of the mm-wave frequency band signal, and increase the gain of the mm-wave antenna module 2. With the above design, it is possible to optimize application of mm-wave frequency band in the electronic device 100 such as the mobile phone and the like, and improve a communication rate and a frequency band of signals in electronic devices 100.

As illustrated in FIG. 2 and FIG. 3, the orthographic projection of antenna module 2 on the dielectric structure 1 falls in the second region 12.

Specifically, as illustrated in FIG. 2 and FIG. 3, the second region 12 is at a back surface of the electronic device 100. The second region 12 has a size of $W_1$ in the X-axis direction and a size of $L_1$ in the Y-axis direction, and the antenna module 2 has a size of $W_2$ in the X-axis direction and a size of $L_2$ in the Y-axis direction, where $w_1 \geq w_2$, and $L_1 \geq L_2$. Because the second region 12 has a relatively great transmittance to the RF signal, by setting size of the antenna module 2 to be less than that of the second region 12, more RF signals emitted from the antenna module 2 passes through the second region 12, such that the loss of the RF signals can be reduced, and the radiation efficiency of the antenna module 2 can be improved.

As illustrated in FIG. 2, a center of the antenna module 2 is aligned with a center of the second region 12 in an arrangement direction of the first region 11, the second region 12, and the third region 13.

Specifically, the antenna module 2 functions as a point emission source. By aligning the center of the antenna module 2 with the center of the second region 12, the center of the antenna module 2 is in the normal direction of the second region 12, such that after a RF signal radiated by the antenna module 2 passes through the first region 11, the second region 12, and the third region 13, the spherically radiated RF signal can form a plane beam along the normal direction of the second region 12, so as to achieve the beamforming of the RF signal, increase the gain of the RF signal, and optimize performance of the antenna module 2 in free space.

Improvements to the second region 12 include, but are not limited to, improvements to materials of the second region 12, or provision of the metamaterial structure on the second region 12, such that the phase variation to the RF signal brought by the second region 12 can be greater than that brought by the first region 11 and the third region 13, the gain of the RF signal of the antenna module 2 can be increased with aid of the dielectric structure 1, and application of the antenna assembly 10 in the electronic device 100 such as a mobile phone can be improved. The improvements to the second region 12 in the present disclosure include, but are not limited to those provided in the implementation below.

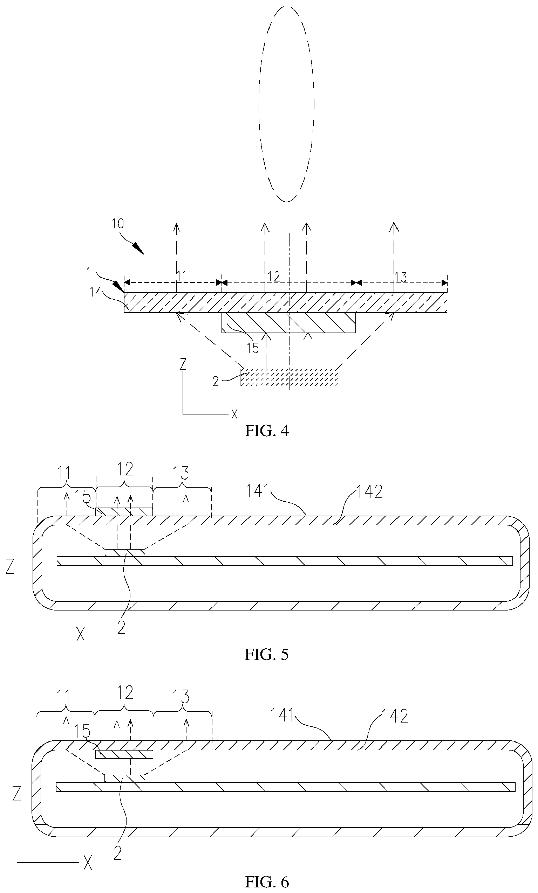

As illustrated in FIG. 4, the dielectric structure 1 includes a housing substrate 14 and a resonant structure 15 disposed at the housing substrate 14. A region of the housing substrate 14 where the resonant structure 15 is disposed serves as the second region 12, a region of the housing substrate 14 at one side of the resonant structure 15 serves as the first region 11, and a region of the housing substrate 14 at the other side of the resonant structure 15 serves as the third region 13.

Specifically, the electronic device 100 is a mobile phone, for example. The dielectric structure 1 may be a battery cover of the mobile phone. The resonant structure 15 is configured to generate a secondary radiation wave under the action of the RF signal, the secondary radiation wave interacts with an incident RF signal to change the phase of the RF signal, such that the second region 12 of the dielectric structure 1 can bring a relatively great phase variation to the RF signal. The housing substrate 14 is part of a housing of the electronic device 100, and the housing substrate 14 itself can change the phase of the RF signal due to material loss, surface waves and other effects. The phase variation of the housing substrate 14 to the RF signal is less than the phase variation brought by a housing substrate provided with the resonant structure 15 to the RF signal.

In this implementation, by disposing the resonant structure 15 at a partial region of the housing substrate 14, the housing substrate 14 itself brings a less phase variation to the RF signal, such that the dielectric structure 1 can be formed into a structure which can bring a less phase variation, a great phase variation, and a less phase variation in different regions of the dielectric structure 1. Such structure of the dielectric structure 1 is similar to a "lens" which has a large thickness in the middle and a small thickness on both sides, so as to achieve beamforming of the RF signal of the antenna module 2, increase a gain of the antenna module 2, and further achieve a wider application of the mm-wave frequency band in the electronic device 100 such as a mobile phone.

The resonant structure 15 can be disposed at a partial region of the housing substrate 14 in various manners which are not limited herein and can include, but are not limited to, the manners provided in the following implementations.

In a first possible implementation, as illustrated in FIG.5, the housing substrate 14 has a first surface 141 and a second surface 142 which is opposite to the first surface 141 and faces the antenna module 2. The resonant structure 15 is disposed on the first surface 141.

Specifically, as illustrated in FIG. 5, the housing substrate 14 is the battery cover of the electronic device 100, for example. The first surface 141 is an outer surface of the housing substrate 14, and the second surface 142 is an inner surface of the housing substrate 14. When the resonant structure 15 is disposed on the first surface 141, the resonant structure 15 may be disposed on a flexible substrate, and the flexible substrate is fixed on the first surface 141, such that the resonant structure 15 is fixed on the housing substrate 14. It can be understood that, in this implementation, the resonant structure 15 is disposed outside the housing substrate 14, and the antenna module 2 is disposed inside the electronic device 100 and faces the resonant structure 15. The resonant structure 15 will not occupy space in the electronic device 100. In addition, when the resonant structure 15 and the antenna module 2 need to be disposed by a certain distance, the resonant structure 15 can be disposed outside the housing substrate 14. As such, a distance between the antenna module 2 and the inner surface of the housing substrate 14 will not be too large, and the thickness of the electronic device 100 can be further reduced. It can be understood that, a surface of the resonant structure 15 can be processed to have a consistent appearance with the first surface 141.

In a second possible implementation, as illustrated in FIG. 6, the resonant structure 15 is disposed on the second surface 142, which is different from the first possible implementation.

The resonant structure 15 is disposed inside the housing substrate 14 of the electronic device 100 when the resonant structure 15 is disposed on the second surface 142. As such, the resonant structure 15 is not vulnerable to wear or damage, service life of the antenna assembly 10 can be prolonged, and the appearance consistency of the housing substrate 14 can also be ensured.

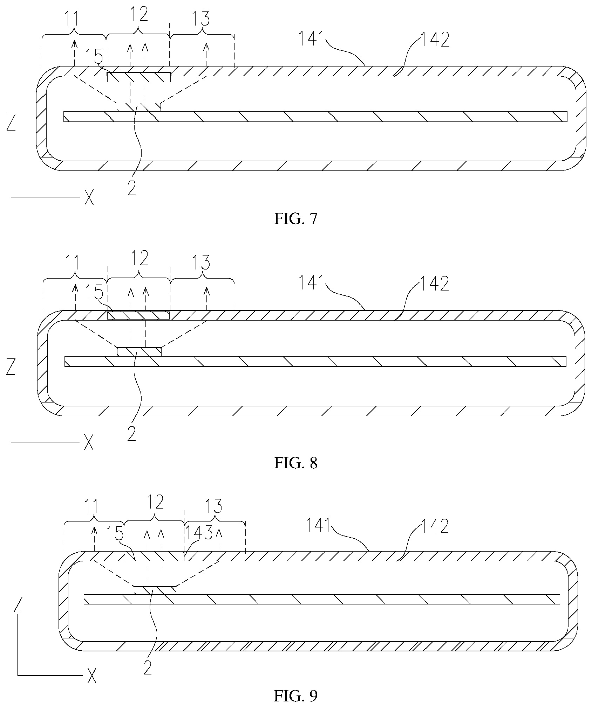

In a third possible implementation, as illustrated in FIG. 7, the resonant structure 15 is at least partially embedded between the first surface 141 and the second surface 142, which is different from the first possible implementation.

Specifically, as illustrated in FIG. 7, the first surface 141 or the second surface 142 can define a groove 143, and the resonant structure 15 can be disposed in the groove 143.

The resonant structure 15 is at least partially embedded between the first surface 141 and the second surface 142, such that thickness of the resonant structure 15 partially coincides with thickness of the housing substrate 14, and the thickness of the electronic device 100 is reduced. In this case, the groove 143 is a positioning structure for the resonant structure 15, so as to improve assembly efficiency of the antenna assembly 10.

Furthermore, as illustrated in FIG. 8, the resonant structure 15 as a whole can be embedded between the first surface 141 and the second surface 142. The resonant structure 15 can be integrally formed with the housing substrate 14, such that the thickness of the electronic device 100 can be reduced by avoiding that the resonant structure 15 is stacked with the housing substrate 14 in the Z-axis direction.

In a fourth possible implementation, as illustrated in FIG. 9, the housing substrate 14 may define a through hole 143 extending through the first surface 141 and the second surface 142, which is different from the first possible implementation. The resonant structure 15 is received in the through hole 143, such that the thickness of the electronic device 100 can be reduced by avoiding that the resonant structure 15 is stacked with the housing substrate 14 in the Z-axis direction.

As illustrated in FIG. 2, the antenna module 2 is separated from the resonant structure 15 by a predetermined distance, such that a relatively strong RF signal emitted by the antenna module 2 can be adequately emitted to each region of the resonant structure 15, and a utilization rate of the resonant structure 15 can be improved.

Specifically, the first region 11, the second region 12, and the third region 13 are arranged along a predetermined direction, and the predetermined distance increases as a size of the resonant structure 15 in the predetermined direction increases, such that the relatively strong RF signal emitted by the antenna module 2 can be adequately emitted to each region of the resonant structure 15, and the utilization rate of the resonant structure 15 can be improved.

Specifically, the predetermined distance satisfies a formula (1)

$$gap \geq \frac{W_1}{2} \times \cot\left\{\sin^{-1}\left[\frac{|\varphi_1 - \varphi_2| \times \lambda}{\pi \times W_1}\right]\right\},$$ where *gap* represents the predetermined distance, $w_1$ represents the size of the resonant structure 15 in the predetermined direction, $\varphi_1$ represents the second phase variation, $\varphi_2$ represents the first phase variation, and $\lambda$ represents a wavelength of the RF signal.

It can be understood that, the predetermined distance is relative to a difference between the first phase variation and the second phase variation, and also relative to the wavelength of the RF signal, in other words, the distance is relative to frequency of the RF signal. In addition, the predetermined distance is also relative to a length of the resonant structure 15 in the predetermined direction.

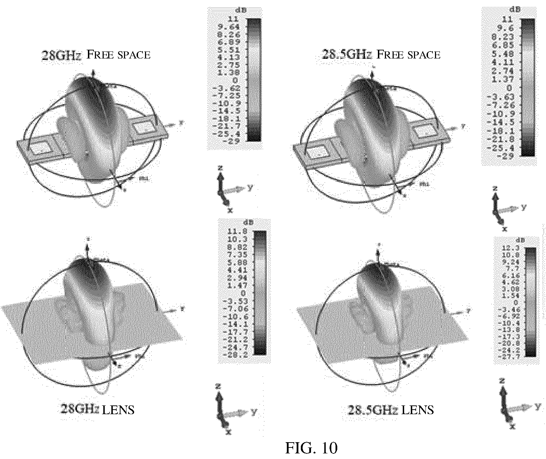

The above formula (1) for determining the predetermined distance is provided in this implementation. By calculating the predetermined distance with the above formula (1), the predetermined distance, with which an optimal gain effect on the RF signal can be achieved, can be reasonably designed. As illustrated in FIG. 10, when the above formula (1) is satisfied, compared with in the free space, when the antenna module 2 is under the "lens" (metasurface lens) with the resonant structure 15 and the RF signal is at a frequency point of 28 gigahertz (GHz), the gain of the antenna module 2 is increased by 0.8dB; when the RF signal is at a frequency point of 28.5GHz, the gain of the antenna module 2 is increased by 1.3db. In other words, the antenna assembly 10 provided in the present disclosure can improve the gain of the RF signal in the mm-wave frequency band.

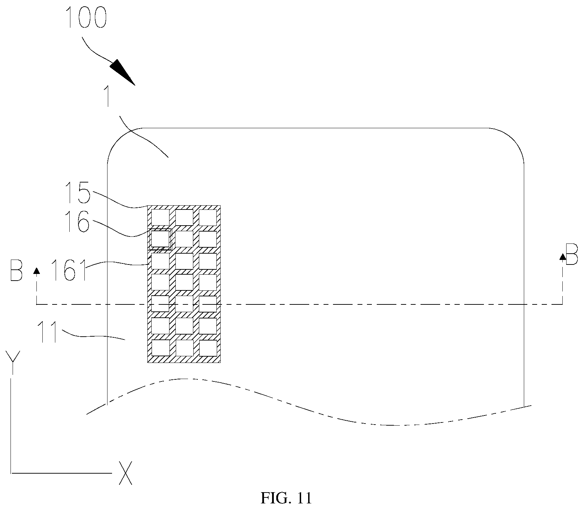

As illustrated in FIG. 11, the resonant structure 15 includes multiple resonant elements 16 arranged in an array and insulated from one another, and each of the multiple resonant elements 16 includes at least one conductive-patch layer 161(i.e., layer of a conductive-patch).

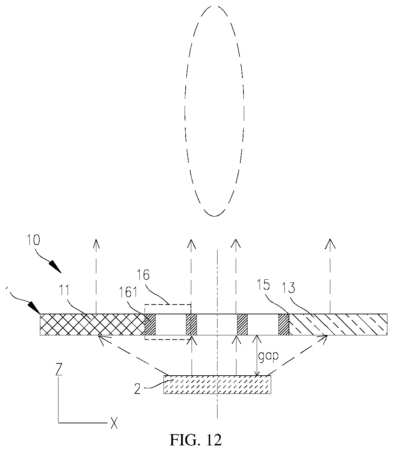

As illustrated in FIG. 11 and FIG. 12, when the at least one conductive-patch layer 161 is a single conductive-patch layer 161, the resonant structure 15 includes one conductive layer in which multiple through holes 143 are defined and arranged at regular intervals. Each of the multiple through holes 143 has various shapes including, but not limited to, cross, rectangle, rectangular ring, cross ring, circle ring, triangle, circle, polygon, etc. The through hole 143 is equivalent to a capacitor of the resonant structure 15, and a conductive part between two adjacent through holes 143 is equivalent to an inductor of the resonant structure 15. The resonant structure 15 has full transparent characteristics to the incident RF signal at a resonant frequency point, and has reflection characteristics of different degrees to the incident RF signal at other frequency points. When the frequency band of the RF signal is a resonant frequency band, the RF signal radiated into the resonant structure 15 can excite the resonant structure 15 to generate a secondary radiation, such that the resonant structure 15 has relatively high transmittance performance for the RF signal.

In addition, the multiple through holes 143 in the resonant structure 15 may also be arranged at irregular intervals. The multiple through holes 143 in the resonant structure 15 may have a same shape or different shapes.

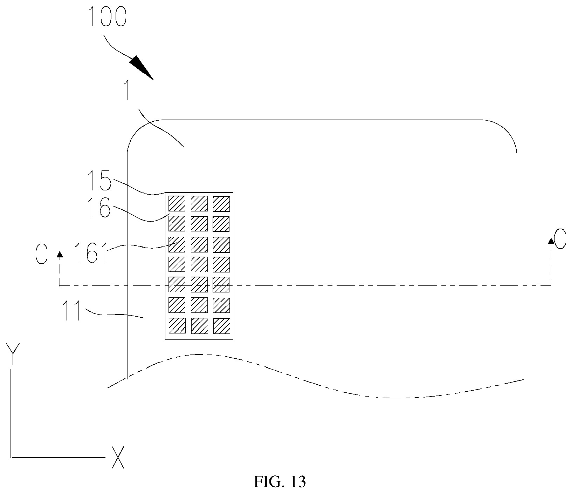

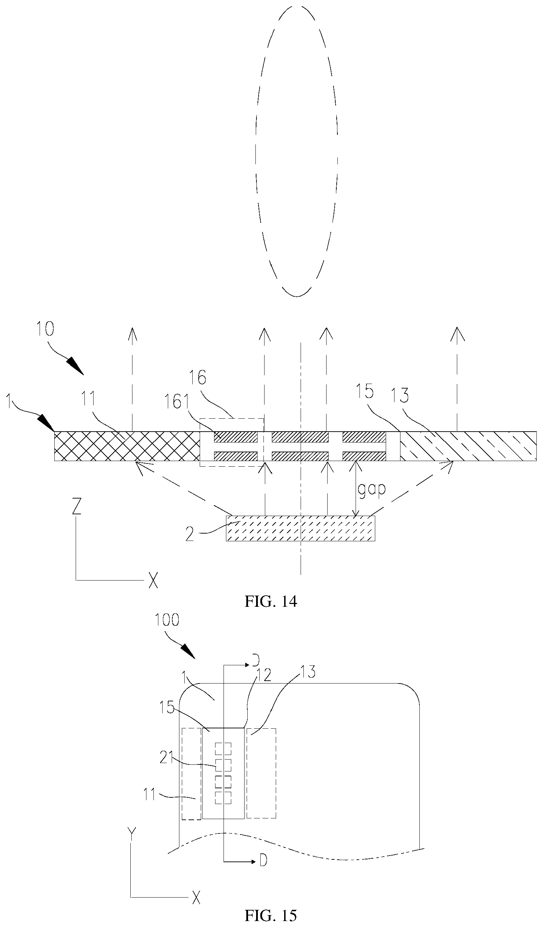

As illustrated in FIG. 13 and FIG. 14, when the at least one conductive-patch layer 161 has multiple conductive-patch layers spaced apart, the resonant structure 15 includes multiple conductive layers spaced apart, each of the multiple conductive layers may include conductive patches 161 which are arranged in an array, and conductive patches 161 of different conductive layers have a same shape or different shapes.

Specifically, the resonant structure 15 includes the multiple conductive layers spaced apart, and each of the multiple conductive layers may be a patch-type structure element or an aperture-type structure element (i.e., grid-type structure). Specifically, the patch-type structure element includes the multiple conductive patches 161 which are arranged in an array and insulated from one another. Each of the multiple conductive patches 161 has various shapes including, but not limited to, cross, rectangle, rectangular ring, cross ring, circle ring, triangle, circle, polygon, etc. The conductive patch 161 is equivalent to an inductor of the resonant structure 15, and a gap between two adjacent conductive patches 161 is equivalent to a capacitor of the resonant structure 15. The multiple conductive patches 161 have full reflection characteristics to the incident RF signal at a resonant frequency point, and have transmittance characteristics of different degrees to the incident RF signal at other frequency points. The grid-type structure element includes the conductive layer and the multiple through holes 143 defined in the conductive layer and arranged at regular intervals. Each of the multiple through holes 143 has various shapes including, but not limited to cross, rectangle, rectangular ring, cross ring, circle ring, triangle, circle, polygon, etc.

Specifically, the multiple conductive patches 161 on each of the multiple conductive layers may have a same shape or different shapes, and adjacent conductive layers may be in a same type or different types. For example, when the multiple conductive layers are two conductive layers, the two conductive layers may adopt the patch-type structure element and the aperture-type structure element, the patch-type structure element and the patch-type structure element, the aperture-type structure element and the aperture-type structure element, or the aperture-type structure element and the patch-type structure element.

The reflection brought by the dielectric structure 1 to the RF signal can be reduced when the resonant structure 15 is disposed at the housing substrate 14, such that the dielectric structure 1 can have an improved transmittance to the RF signal. When the antenna assembly 10 is applied to a mobile phone, the battery cover can have an improved transmittance to the RF signal. Since the resonant structure 15 is disposed at a partial region of the housing substrate 14, such that the housing substrate 14 together with the resonant structure 15 can act as a "lens", the energy of the RF signal can be concentrated, and the gain of the antenna module 2 can be enhanced.

It can be understood that, the multiple conductive patches 161 are made of metal materials. In other implementations, the multiple conductive patches 161 may also be made of non-metallic conductive materials.

The housing substrate 14 may be made of at least one or a combination of plastic, glass, sapphire, and ceramic.

As illustrated in FIG. 15, the antenna module 2 includes multiple radiating elements 21. An arrangement direction of the multiple radiating elements 21 intersects an arrangement direction of the first region 11, the second region 12, and the third region 13.

In this implementation, the multiple radiating elements 21 are arranged in a linear array. In other implementations, the multiple radiating elements 21 may also be arranged in a two-dimensional matrix or a three-dimensional matrix.

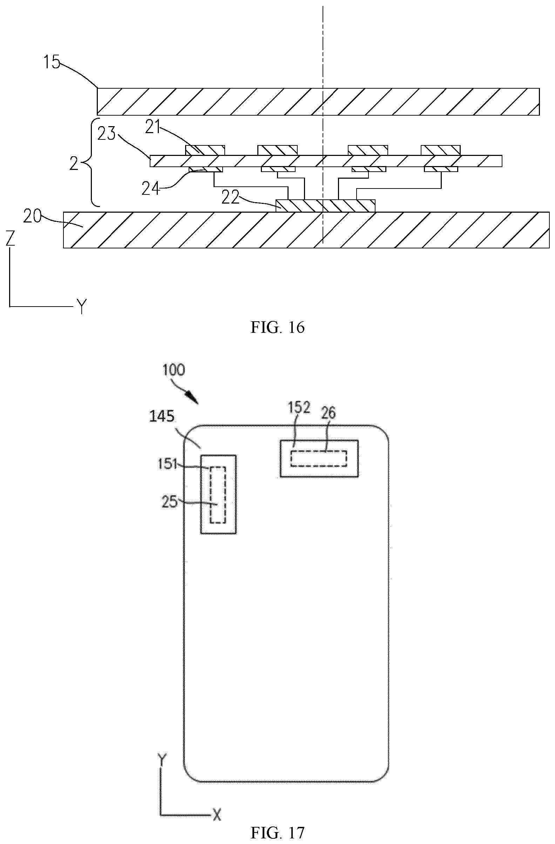

As illustrated in FIG. 16, the antenna module 2 further includes a RF chip 22 and an insulated substrate 23. The multiple radiating elements 21 are disposed on the insulated substrate 23, and on a side of the insulated substrate 23 facing a housing assembly. The RF chip 22 is configured to generate an excitation signal (also referred to the RF signal). The RF chip 22 may be disposed on a main board 20 of the electronic device 100, where the RF chip 22 is at a side of the insulated substrate 23 away from the multiple radiating elements 21. The RF chip 22 is electrically connected with the multiple radiating elements 21 through transmission lines embedded in the insulated substrate 23.

Furthermore, as illustrated in FIG. 16, each of the multiple radiating elements 21 includes at least one feed point 24, each feed point 24 is electrically connected with the RF chip 22 through a transmission line, a distance between each feed point 24 and a center of a radiating element 21 corresponding to that feed point 24 is greater than a predetermined distance. Input impedance of the multiple radiating elements 21 can be changed by adjusting a location of the feed point 24. In this implementation, by setting the distance between each feed point 24 and the center of the radiating element 21 corresponding to that feed point 24 to be greater than the predetermined distance, the input impedance of the multiple radiating elements 21 is adjusted. By adjusting the input impedance of the multiple radiating elements 21, the input impedance of the multiple radiating elements 21 can be matched with output impedance of the RF chip 22. When the input impedance of the multiple radiating elements 21 is matched with the output impedance of the RF chip 22, the excitation signal generated by the RF chip 22 has a minimum reflection amount.

It can be understood that, the antenna module 2 may be at least one or a combination of a patch antenna, a laminated antenna, a dipole antenna, a magneto-electric dipole antenna, and a quasi-Yagi antenna.

It can be understood that, the electronic device 100 provided in the first implementation of the present disclosure includes the antenna assembly 10 according to any of the above implementations. When the electronic device 100 is a mobile phone, the dielectric structure 1 of the antenna assembly 10 may be a housing structure, which includes the housing substrate 14 and the resonant structure 15 disposed on the housing substrate 14.

In a second implementation, an electronic device 100 is further provided. The electronic device 100 in the second implementation is substantially identical to the electronic device 100 in the first implementation except the following. The electronic device 100 includes a housing, at least one resonant structure 15 disposed at a partial region of the housing, and at least one mm-wave antenna array. Each mm-wave antenna array faces one resonant structure 15. The resonant structure 15 is configured to bring a fourth phase variation to a RF signal radiated by the mm-wave antenna array. The housing is configured to bring a fifth phase variation to the RF signal emitted by the mm-wave antenna array at a region without the resonant structure 15. The fourth phase variation is greater than the fifth phase variation, such that the resonant structure 15 enhances a gain of the RF signal emitted by the mm-wave antenna array.

As for the housing, reference can be made to the above description of the housing substrate 14 in the first implementation. As for the resonant structure 15, reference can be made to the above description in the first implementation. As for the mm-wave antenna array, reference can be made to the above description of the antenna module 2 in the first implementation, which will not be repeated herein.

In this implementation, a mobile phone is taken as an example of the electronic device 100 for illustration. The housing is the battery cover. The electronic device 100 at least includes a mobile phone capable of communication with a mm-wave.

The resonant structure 15 is disposed at a partial region of the housing, such that the phase variation of the RF signal in the partial region is greater than that in other regions of the housing, the phases of the RF signal passing through the housing are regulated, and the RF signal emitted from the housing has the same phase. Therefore, the energy of the RF signal emitted by the mm-wave antenna array can be concentrated, the gain of the RF signal emitted by the mm-wave antenna array can be increased, and communication quality of the electronic device 100 can be improved.

As illustrated in FIG. 17, the housing includes the battery cover 145. The at least one resonant structure 15 includes a first resonant structure 151 and a second resonant structure 152 which are disposed on the battery cover 145. The at least one mm-wave antenna array includes a first mm-wave antenna array 25 facing the first resonant structure 151 and a second mm-wave antenna array 26 facing the second resonant structure 152. An arrangement direction of multiple radiating elements 21 in the first mm-wave antenna array 25 intersects an arrangement direction of multiple radiating elements 21 in the second mm-wave antenna array 26.

Specifically, multiple radiation elements 21 in the first mm-wave antenna array 25 are arranged in the Y-axis direction, the first mm-wave antenna array 25 performs beam scanning in the Y-axis direction, and a gain of the first mm-wave antenna array 25 in the Y-axis direction is enhanced. Multiple radiating elements 21 in the second mm-wave antenna array 26 are arranged in the X-axis direction, the second mm-wave antenna array 26 performs the beam scanning in the X-axis direction, and a gain of the second mm-wave antenna array 26 in the X-axis direction is enhanced, such that the first mm-wave antenna array 25 and the second mm-wave antenna array 26 perform the beam scanning with high gain in different directions respectively, so as to improve beam space coverage of the electronic device 100 and a gain of the electronic device 100.

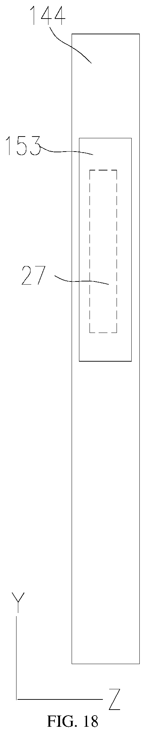

Specifically, as illustrated in FIG. 18, the housing includes a frame 144 surrounding a peripheral side of the battery cover 145, and the at least one resonant structure 15 further includes a third resonant structure 153 disposed on the frame 144. The at least one mm-wave antenna array further includes a third mm-wave antenna array 27 facing the third resonant structure 153. An arrangement direction of the multiple radiating elements 21 in the third mm-wave antenna array 27 is consistent with an extension direction of a side edge of the frame 144 where the third resonant structure 153 is disposed.

Specifically, the arrangement direction of the multiple radiating elements 21 in the third mm-wave antenna array 27 extends along the extension direction of the side edge of the 144, such as along the Y-axis direction or the X-axis direction. The third mm-wave antenna array 27 performs beam scanning in the Y-axis direction, and a gain of the third mm-wave antenna array 27 in the Y-axis direction is enhanced. In combination with the first mm-wave antenna array 25 and the second mm-wave antenna array 26, the electronic device 100 provided in this implementation can perform the beam scanning with high gain in vertical and horizontal directions on the back surface of the electronic device 100, and can also perform the beam scanning with high gain on four sides of the electronic device 100, so as to improve the beam space coverage of the electronic device 100 and the gain of the electronic device 100.

The present disclosure includes, but is not limited to, the above three antenna arrays and arrangement of the three antenna arrays.

The above are part of implementations in the present disclosure. It should be noted that, for those of ordinary skill in the art, without departing from principles of the present disclosure, several improvements and modifications can be made, and these improvements and modifications may also fall under the scope of protection of the present disclosure defined in the appended claims.

**Claims**

1. An antenna assembly (10), comprising:

   a dielectric structure (1) having a first region (11), a second region (12), and a third region (13) connected in sequence in a predetermined direction (X);
   an antenna module (2), facing the second region and configured to emit a radio frequency, RF, signal, wherein the first region is configured to bring a first phase variation to the RF signal, the second region is configured to bring a second phase variation to the RF signal, the third region is configured to bring a third phase variation to the RF signal, and the second phase variation is different from the first phase variation and the third phase variation; wherein,
   the dielectric structure (1) comprises a housing substrate (14) and a resonant structure (15) disposed at the housing substrate, a region of the housing substrate where the resonant structure is disposed serves as the second region, a region of the housing substrate disposed at one side of the resonant structure serves as the first region, and a region of the housing substrate disposed at the other side of the resonant structure serves as the third region;
   the antenna module is spaced apart from the resonant structure by a predetermined distance, gap,; and
   **characterized in that**:
   the predetermined distance, gap, satisfies:

   $$gap \geq \frac{w_1}{2} \times \cot\left\{ \sin^{-1}\left[ \frac{|\varphi_1 - \varphi_2| \times \lambda}{\pi \times w_1} \right] \right\}$$

   wherein *gap* represents the predetermined distance, $w_1$ represents a size of the resonant structure in the predetermined direction, $\varphi_1$ represents the second phase variation, $\varphi_2$ represents the first phase variation, and $\lambda$ represents a wavelength of the RF signal.

2. The antenna assembly of claim 1, wherein an equivalent dielectric constant of the second region (12) is set to be greater than that of the first region (11) and that of the third region (13), such that the second phase variation is greater than the first phase variation and the third phase variation, and a gain of the RF signal emitted by the antenna module is enhanced after the RF signal passes through the dielectric structure.

3. The antenna assembly of claim 1, wherein an equivalent dielectric constant of the second region (12) is set to be less than that of the first region (11) and the third region (13), such that the second phase variation is less than the first phase variation and the third phase variation, and a coverage of the RF signal emitted by the antenna module is enhanced after the RF signal passes through the dielectric structure.

4. The antenna assembly of claim 1, wherein the second region has a transmittance to the RF signal greater than the first region and the third region.

5. The antenna assembly of claim 1, wherein an orthographic projection of the antenna module on the dielectric structure falls within the second region.

6. The antenna assembly of claim 1, wherein the housing substrate has a first surface (141) and a second surface (142) which is opposite to the first surface and faces the antenna module, wherein one of:

   the resonant structure is disposed on the first surface;
   the resonant structure is disposed on the second surface; or
   the resonant structure is at least partially embedded between the first surface and the second surface.

7. The antenna assembly of claim 1, wherein the predetermined distance increases as a size of the resonant structure in the predetermined direction increases.

8. The antenna assembly of claim 1, wherein the resonant structure comprises one conductive layer (161) in which a plurality of through holes (143) are defined and arranged at regular intervals.

9. The antenna assembly of claim 1, wherein the resonant structure comprises a plurality of conductive layers (161) spaced apart from one another; one of the plurality of conductive layers comprises conductive patches arranged in an array, and conductive patches of different conductive layers have a same shape or different shapes; or one of the plurality of conductive layers defines a plurality of through holes at regular intervals.

10. An electronic device (100), comprising the antenna assembly (10) of any of claims of 1 to 9.

11. The electronic device (100) of claim 10, when claim 10 depends on claims 4-9, further comprising a housing, wherein the housing serves as the housing substrate (14), the resonant structure (15) is implemented as at least one resonant structure (15) disposed at a partial region of the housing, and the antenna module (2) is implemented as at least one millimeter-wave (mm-wave) antenna array; and
    wherein each of the at least one mm-wave antenna array faces one resonant structure, the resonant structure is configured to bring the first phase variation to a mm-wave emitted by the mm-wave antenna array, a region of the housing without the resonant structure is configured to bring the second phase variation to the mm-wave emitted by the mm-wave antenna array, an equivalent dielectric constant of the region of the housing with the resonant structure is set to be greater than that of the region of the housing without the resonant structure, such that the first phase variation is greater than the second phase variation, and the resonant structure enhances a gain of the mm-wave emitted by the mm-wave antenna array.

12. The electronic device of claim 11, wherein the housing comprises a battery cover (145), the at least one resonant structure comprises a first resonant structure (151) and a second resonant structure (152) which are disposed on the battery cover, the at least one mm-wave antenna array comprises a first mm-wave antenna array (25) facing the first resonant structure and a second mm-wave antenna array (26) facing the second resonant structure, and an arrangement direction of radiating elements in the first mm-wave antenna array intersects an arrangement direction of radiating elements in the second mm-wave antenna array.

**Patentansprüche**

1. Antennenanordnung (10), die Folgendes umfasst:

    eine dielektrische Struktur (1), die eine erste Region (11), eine zweite Region (12) und eine dritte Region (13) aufweist, die in Sequenz in einer vorbestimmten Richtung (X) verbunden sind;
    ein Antennenmodul (2), das der zweiten Region zugewandt ist und dazu ausgelegt ist, ein Hochfrequenz- bzw. HF-Signal zu emittieren, wobei die erste Region dazu ausgelegt ist, eine erste Phasenvariation in das HF-Signal einzubringen, die zweite Region dazu ausgelegt ist, eine zweite Phasenvariation in das HF-Signal einzubringen, die dritte Region dazu ausgelegt ist, eine dritte Phasenvariation in das HF-Signal einzubringen, und wobei die zweite Phasenvariation verschieden von der ersten Phasenvariation und der dritten Phasenvariation ist,
    wobei die dielektrische Struktur (1) ein Gehäusesubstrat (14) und eine am Gehäusesubstrat angeordnete resonante Struktur (15) umfasst, wobei eine Region des Gehäusesubstrats, wo die resonante Struktur angeordnet ist, als die zweite Region dient, eine Region des Gehäusesubstrats, die an einer Seite der resonanten Struktur angeordnet ist, als die erste Region dient und eine Region des Gehäusesubstrats, die an der anderen Seite der resonanten Struktur angeordnet ist, als die dritte Region dient;
    wobei das Antennenmodul um einen vorbestimmten Abstand, *gap*, von der resonanten Struktur beabstandet ist; und
    **dadurch gekennzeichnet, dass**:
    der vorbestimmte Abstand, *gap*, Folgendes erfüllt:

$$gap \geq \frac{w_1}{2} \times \cot\left\{ \sin^{-1}\left[ \frac{|\varphi_1 - \varphi_2| \times \lambda}{\pi \times w_1} \right] \right\}$$

    wobei *gap* den vorbestimmten Abstand repräsentiert, $w_1$ eine Größe der resonanten Struktur in der vorbestimmten Richtung repräsentiert, $\varphi_1$ die zweite Phasenvariation repräsentiert, $\varphi_2$ die erste Phasenvariation repräsentiert und $\lambda$ eine Wellenlänge des HF-Signals repräsentiert.

2. Antennenanordnung nach Anspruch 1, wobei eine äquivalente Dielektrizitätskonstante der zweiten Region (12) so gesetzt ist, dass sie größer als die der ersten Region (11) und die der dritten Region (13) ist, sodass die zweite Phasenvariation größer als die erste Phasenvariation und die dritte Phasenvariation ist und eine Verstärkung des durch das Antennenmodul emittierten HF-Signals verbessert wird, nachdem das HF-Signal die dielektrische Struktur passiert.

3. Antennenanordnung nach Anspruch 1, wobei eine äquivalente Dielektrizitätskonstante der zweiten Region (12) so gesetzt ist, dass sie kleiner als die der ersten Region (11) und der dritten Region (13) ist, sodass die zweite Phasenvariation kleiner als die erste Phasenvariation und die dritte Phasenvariation ist und eine Abdeckung des durch das Antennenmodul emittierten HF-Signals verbessert wird, nachdem das HF-Signal die dielektrische Struktur passiert.

4. Antennenanordnung nach Anspruch 1, wobei die zweite Region eine Durchlässigkeit für das HF-Signal aufweist, die größer als die der ersten Region und die der dritten Region ist.

5. Antennenanordnung nach Anspruch 1, wobei eine orthographische Projektion des Antennenmoduls auf die dielektrische Struktur in die zweite Region fällt.

6. Antennenanordnung nach Anspruch 1, wobei das Gehäusesubstrat eine erste Oberfläche (141) und eine zweite Oberfläche (142), die der ersten Oberfläche gegenüberliegt und dem Antennenmodul zugewandt ist, aufweist, wobei entweder:

   die resonante Struktur auf der ersten Oberfläche angeordnet ist;
   die resonante Struktur auf der zweiten Oberfläche angeordnet ist; oder
   die resonante Struktur zumindest teilweise zwischen der ersten Oberfläche und der zweiten Oberfläche eingebettet ist.

7. Antennenanordnung nach Anspruch 1, wobei sich der vorbestimmte Abstand vergrößert, wenn sich eine Größe der resonanten Struktur in der vorbestimmten Richtung vergrößert.

8. Antennenanordnung nach Anspruch 1, wobei die resonante Struktur eine leitfähige Schicht (161) umfasst, in der mehrere Durchgangslöcher (143) definiert und in regelmäßigen Intervallen angeordnet sind.

9. Antennenanordnung nach Anspruch 1, wobei die resonante Struktur mehrere leitfähige Schichten (161) umfasst, die voneinander beabstandet sind; wobei eine der mehreren leitfähigen Schichten leitfähige Patches umfasst, die in einem Array angeordnet sind, und wobei die leitfähigen Patches von verschiedenen leitfähigen Schichten eine gleiche Form oder unterschiedliche Formen aufweisen; oder wobei eine der mehreren leitfähigen Schichten mehrere Durchgangslöcher in regelmäßigen Intervallen definiert.

10. Elektronische Vorrichtung (100), umfassend die Antennenanordnung (10) nach einem der Ansprüche 1 bis 9.

11. Elektronische Vorrichtung (100) nach Anspruch 10, wenn Anspruch 10 von Ansprüchen 4-9 abhängt,

   ferner umfassend ein Gehäuse, wobei das Gehäuse als das Gehäusesubstrat (14) dient, die resonante Struktur (15) als zumindest eine resonante Struktur (15), die in einer Teilregion des Gehäuses angeordnet ist, umgesetzt ist, und das Antennenmodul (2) als zumindest ein Millimeterwellen- bzw. mm-Wellen-Antennenarray umgesetzt ist; und
   wobei jedes des mindestens einen mm-Wellen-Antennenarrays einer resonanten Struktur zugewandt ist, wobei die resonante Struktur dazu ausgelegt ist, die erste Phasenvariation in eine durch das mm-Wellen-Antennenarray emittierte mm-Welle einzubringen, wobei eine Region des Gehäuses ohne die resonante Struktur dazu ausgelegt ist, die zweite Phasenvariation in die durch das mm-Wellen-Antennenarray emittierte mm-Welle einzubringen, wobei eine äquivalente Dielektrizitätskonstante der Region des Gehäuses mit der resonanten Struktur so gesetzt ist, dass sie größer als die der Region des Gehäuses ohne die resonante Struktur ist, sodass die erste Phasenvariation größer als die zweite Phasenvariation ist und die resonante Struktur eine Verstärkung der durch das mm-Wellen-Antennenarray emittierten mm-Welle verbessert.

12. Elektronische Vorrichtung nach Anspruch 11, wobei das Gehäuse eine Batterieabdeckung (145) umfasst, die zumindest eine resonante Struktur eine erste resonante Struktur (151) und eine zweite resonante Struktur (152) umfasst, die an der Batterieabdeckung angeordnet sind, das zumindest eine mm-Wellen-Antennenarray ein erstes mm-Wellen-Antennenarray (25), das der ersten resonanten Struktur zugewandt ist, und ein zweites mm-Wellen-Antennenarray (26), das der zweiten resonanten Struktur zugewandt ist, umfasst, und wobei eine Anordnungsrichtung von strahlenden Elementen im ersten mm-Wellen-Antennenarray eine Anordnungsrichtung von strahlenden Elementen im zweiten mm-Wellen-Antennenarray schneidet.

**Revendications**

1. Ensemble antenne (10), comprenant :

    une structure diélectrique (1) ayant une première région (11), une deuxième région (12) et une troisième région (13) connectées en séquence dans une direction prédéterminée (X) ;
    un module d'antenne (2), faisant face à la deuxième région et configuré pour émettre un signal radiofréquence, RF, dans lequel la première région est configurée pour provoquer une première variation de phase au signal RF, la deuxième région est configurée pour provoquer une deuxième variation de phase au signal RF, la troisième région est configurée pour provoquer une troisième variation de phase au signal RF, et la deuxième variation de phase est différente de la première variation de phase et de la troisième variation de phase ; dans lequel
    la structure diélectrique (1) comprend un substrat de réception (14) et une structure résonante (15) disposée sur le substrat de réception, une région du substrat de réception où est disposée la structure résonante sert de deuxième région, une région du substrat de réception disposée sur un côté de la structure résonante sert de première région, et une région du substrat de réception disposée sur l'autre côté de la structure résonante sert de troisième région ;
    le module d'antenne est espacé de la structure résonante d'une distance prédéterminée, espace ;
    et **caractérisé en ce que** :
    la distance prédéterminée, *espace,* satisfait la formule :

$$espace \;\geq\; \frac{W_1}{2}\; x \cot\left\{sin^{-1}\left\lfloor\frac{|\varphi_1 - \varphi_2|x\lambda}{\pi\, x\, W_1}\right\rfloor\right\}$$

    où *espace* représente la distance prédéterminée, $W_1$ représente une taille de la structure résonante dans la direction prédéterminée, $\varphi_1$ représente la deuxième variation de phase, $\varphi_2$ représente la première variation de phase et $\lambda$ représente une longueur d'onde du signal RF.

2. Ensemble antenne selon la revendication 1, dans lequel une constante diélectrique équivalente de la deuxième région (12) est définie comme étant supérieure à celle de la première région (11) et à celle de la troisième région (13), de telle sorte que la deuxième variation de phase est supérieure à la première variation de phase et à la troisième variation de phase, et un gain du signal RF émis par le module d'antenne est amélioré après que le signal RF passe par la structure diélectrique.

3. Ensemble antenne selon la revendication 1, dans lequel une constante diélectrique équivalente de la deuxième région (12) est définie comme étant inférieure à celle de la première région (11) et à celle de la troisième région (13), de telle sorte que la deuxième variation de phase est inférieure à la première variation de phase et à la troisième variation de phase, et une couverture du signal RF émis par le module d'antenne est améliorée après que le signal RF passe par la structure diélectrique.

4. Ensemble antenne selon la revendication 1, dans lequel la deuxième région a un facteur de transmission vers le signal RF supérieur à celui de la première région et de la troisième région.

5. Ensemble antenne selon la revendication 1, dans lequel une projection orthographique du module d'antenne sur la structure diélectrique tombe à l'intérieur de la deuxième région.

6. Ensemble antenne selon la revendication 1, dans lequel le substrat de réception a une première surface (141) et une seconde surface (142) qui est opposée à la première surface et fait face au module d'antenne, dans lequel :

    la structure résonante est disposée sur la première surface ; et/ou
    la structure résonante est disposée sur la seconde surface ; et/ou
    la structure résonante est au moins en partie intégrée entre la première surface et la seconde surface.

7.  Ensemble antenne selon la revendication 1, dans lequel
    la distance prédéterminée augmente à mesure qu'une taille de la structure résonante augmente dans la direction prédéterminée.

8.  Ensemble antenne selon la revendication 1, dans lequel la structure résonante comprend une couche conductrice (161) dans laquelle une pluralité de trous traversants (143) sont définis et disposés à intervalles réguliers.

9.  Ensemble antenne selon la revendication 1, dans lequel la structure résonante comprend une pluralité de couches conductrices (161) espacées les unes des autres ; l'une de la pluralité de couches conductrices comprend des fiches conductrices disposées en réseau, et des fiches conductrices de différentes couches conductrices présentent une même forme ou des formes différentes ; ou l'une de la pluralité de couches conductrices définit une pluralité de trous traversants à intervalles réguliers.

10. Dispositif électronique (100), comprenant l'ensemble antenne (10) selon l'une quelconque des revendications 1 à 9.

11. Dispositif électronique (100) selon la revendication 10, lorsque la revendication 10 dépend des revendications 4 à 9, comprenant en outre un logement, dans lequel le logement sert de substrat de réception (14), la structure résonante (15) est mise en œuvre en tant qu'au moins une structure résonante (15) disposée sur une région partielle du réception, et le module d'antenne (2) est mis en œuvre en tant qu'au moins un réseau d'antennes à ondes millimétriques ; et
    dans lequel chacun du ou des réseaux d'antenne à ondes millimétriques fait face à une structure résonante, la structure résonante est configurée pour provoquer la première variation de phase à une onde millimétrique émise par le réseau d'antennes à ondes millimétriques, une région du logement sans la structure résonante est configurée pour provoquer la deuxième variation de phase à l'onde millimétrique émise par le réseau d'antennes à ondes millimétriques, une constante diélectrique équivalente de la région du logement dotée de la structure résonante est définie comme étant supérieure à celle de la région du logement sans la structure résonante, de telle sorte que la première variation de phase est supérieure à la deuxième variation de phase, et la structure résonante améliore un gain de l'onde millimétrique émise par le réseau d'antennes à ondes millimétriques.

12. Dispositif électronique selon la revendication 11, dans lequel le logement comprend un couvercle de batterie (145), la ou les structures résonantes comprennent une première structure résonante (151) et une seconde structure résonante (152) qui sont disposées sur le couvercle de batterie, le ou les réseaux d'antenne à ondes millimétriques comprennent un premier réseau d'antennes à ondes millimétriques (25) faisant face à la première structure résonante et un second réseau d'antennes à ondes millimétriques (26) faisant face à la seconde structure résonante, et une direction d'agencement d'éléments rayonnants dans le premier réseau d'antennes à ondes millimétriques croise une direction d'agencement d'éléments rayonnants dans le second réseau d'antennes à ondes millimétriques.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018095535 A1
- US 2017201014 A1
- EP 0884799 A2